# EUROPÄISCHE PATENTANMELDUNG

(11) **EP 2 826 612 A1**
(43) Veröffentlichungstag der Anmeldung: **21.01.2015**
(21) Anmeldenummer: 13176873.1
(22) Anmeldetag: 17.07.2013
(51) Int. Cl.: B29C 44/58, B29C 44/02, E04B 1/94, B29K 75/00, B29K 83/00, B29L 31/26

(54) **Schäumwerkzeug zur Herstellung eines Profilstranges, Verfahren zur Herstellung eines Profilstranges sowie Profilstrang**

(71) Anmelder: HILTI Aktiengesellschaft, 9494 Schaan (LI)
(72) Erfinder: Münzenberger, Herbert, 65191 Wiesbaden (DE); Paetow, Mario, 86859 Igling (DE); Ober, Andreas, 86916 Kaufering (DE)
(74) Vertreter: Hilti Aktiengesellschaft Corporate Intellectual Property

(57) **Zusammenfassung**

Ein Schäumwerkzeug (10) zum Schäumen eines schnur- oder bandartigen Profilstrangs für den Hoch- oder Tiefbau, insbesondere eines Brandschutzprofils, hat ein Werkzeug und einen in dem Werkzeug ausgebildeten auszuschäumenden Hohlraum (22), wobei der Hohlraum (22) im Wesentlichen eine Spirale darstellt.

## Beschreibung

Die Erfindung betrifft ein Schäumwerkzeug zum Schäumen eines schnur- oder bandartigen Profilstranges, ein Verfahren zur Herstellung eines schnur- oder bandartigen Profilstranges sowie einen Profilstrang.

Profilstränge im Hoch- oder Tiefbau werden zur Abdichtung von Fugen benutzt und dienen häufig auch dem Brandschutz. In diesem Fall sind die Profilstränge aus einem intumeszierenden Material hergestellt, sodass sie sich im Brandfall ausdehnen und dadurch Rauchausbreitung sowie Sauerstoffzufuhr zum Feuer einschränken. Üblicherweise werden die Profilstränge in einem Schäumverfahren, wie dem RIM-Verfahren, in einem länglichen und damit teuren Schäumwerkzeug hergestellt.

Die Integration dieser langen Schäumwerkzeuge in Produktionsanlagen ist problematisch.

Es ist Aufgabe der Erfindung, ein Verfahren und Mittel bereitzustellen, die es ermöglichen, dass die Herstellung von schnur- oder bandartigen Profilsträngen leicht in übliche Produktionsanlagen integriert werden kann.

Diese Aufgabe wird gelöst durch ein Schäumwerkzeug zum Schäumen eines schnur-oder bandartigen Profilstranges für den Hoch- oder Tiefbau, insbesondere eines Brandschutzfugenprofils, mit einem in dem Schäumwerkzeug ausgebildeten auszuschäumenden Hohlraum, wobei der Hohlraum im Wesentlichen eine Spirale darstellt. Durch die Herstellung des Profilstranges in Form einer Spirale entspricht die Länge des Schäumwerkzeugs nicht mehr der Länge des herzustellenden Profilstranges, sondern ist um ein Vielfaches geringer. Das Werkzeug ist damit auch günstiger.

Vorzugsweise sind die radial benachbarten Abschnitte des Hohlraums durch einen dünnen Steg miteinander verbunden, sodass sich eine Verbindungsbrücke am Profilstrang ausbilden kann.

Die Länge der Spirale ist nicht beschränkt.

Die Aufgabe wird ferner durch ein Verfahren zur Herstellung eines schnur- oder bandartigen Profilstranges für den Hoch- oder Tiefbau gelöst, insbesondere einer Rundschnur, eines Fugenprofils oder Streifenmaterials, wobei ein fließfähiges Schäummaterial in ein erfindungsgemäßes Schäumwerkzeug eingebracht wird, im Schäumwerkzeug ausreagiert und anschließend aus dem Schäumwerkzeug entnommen wird.

Vorzugsweise ist das fließfähige Schäummaterial eine Reaktionsmasse, die wenigstens zwei Komponenten enthält, sodass eine Reaktion der beiden Komponenten das Aufschäumen des fließfähigen Schäummaterials bewirkt.

Das fließfähige Schäummaterial kann Polyurethanschaum oder Silikonschaum sein. Aufgrund der weiten Verbreitung und der geringen Kosten dieser Materialien ist ein Profilstrang aus diesen Materialien kostengünstig.

In einer Ausführungsvariante ist das fließfähige Schäummaterial im ausgehärteten Zustand ein elastisch verformbarer Polymerschaum, sodass das Abwickeln des Profilstranges aus seiner Spiralform problemlos möglich ist.

In einer Ausgestaltung der Erfindung ist das fließfähige Material im ausgehärteten Zustand intumeszierend, wodurch die Profilstränge zum Brandschutz eingesetzt werden können.

In einer Ausführungsvariante besteht der Profilstrang aus einem schäumbaren Bindemittel, das ein intumeszierendes Stoffgemisch enthält. Das Bindemittel dient dabei als verbundbildender Träger für das intumeszierende Stoffgemisch. Bevorzugt ist das Stoffgemisch homogen in dem Bindemittel verteilt. Der verbundbildenden Träger ist bevorzugt aus der Gruppe ausgewählt, bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Cellulose, Elastomeren und Gemischen davon, wobei Polyurethane bevorzugt sind.

Das aschebildende und gegebenenfalls intumeszierende Stoffgemisch umfasst die üblichen und dem Fachmann bekannten Brandschutzadditive, welche im Brandfall, also unter Hitzeeinwirkung aufschäumen und dabei einen die Flammenausbreitung hindernden Schaum ausbilden, wie ein intumeszierendes Material auf der Grundlage eines Säurebildners, einer Kohlenstoff liefernden Verbindung und eines Gasbildners. Bevorzugt umfasst das intumeszierende Material als Säurebildner, ein Salz oder ein Ester einer anorganischen, nichtflüchtigen Säure ausgewählt aus Schwefelsäure, Phosphorsäure und Borsäure, als Kohlenstoff liefernde Verbindung eine Poly-hydroxyverbindung und/oder ein thermoplastisches oder duroplastisches polymeres Harzbindemittel und als Gasbildner ein Chlorparaffin, Melamin, eine Melaminverbindung, insbesondere Melamincyanurat, Melaminphosphat, Melaminpolyphosphat, Tris(hydroxyethyl)-cyanurat, Cyanamid, Dicyanamid, Dicyandiamid, Biguanidin und/oder ein Guanidinsalz, insbesondere Guanidinphosphat oder Guanidinsulfat.

Der verbundbildende Träger kann ferner als ablatives Additiv, eine anorganische Verbindung, die Wasser, z.B. als Kristallwasser, fest eingelagert hat und bei Temperaturen bis 100°C nicht austrocknet, dieses aber im Brandfall ab 120°C freisetzt und dadurch temperaturführende Teile kühlen kann, enthalten, bevorzugt ein bei der Brandtemperatur bzw. bei Beflammung wasserabgebendes anorganisches Hydroxid oder Hydrat, insbesondere Aluminiumhydroxid, Aluminiumoxidhydrate oder teilhydratisierte Aluminiumhydroxide. Es kommen aber auch andere, bei der Beflammung wasserabgebende anorganische Hydroxide oder Hydrate in Betracht, wie sie in der EP 0 274 068 A2 beschrieben sind.

Derartige Verbindungen, die als Stoffgemisch in der erfindungsgemäßen Brandschutz-Einlage eingesetzt werden können, sind dem Fachmann bekannt und beispielsweise in den folgenden Druckschriften offenbart, auf die hiermit ausdrücklich Bezug genommen sei: DE 30 25 309 A1, DE 30 41 731 A1, DE 33 02 416 A1, DE 34 11 327 A1, EP 0 043 952 B1, EP 0 051 106 B1, EP 0 061 024 B1, EP 0 116 846 B1, EP 0 158 165 B1, EP 0 274 068 A2, EP 1 347 549 A1, EP 1 641 895 B1 und DE 196 53 503 A1.

Materialien, die für erfindungsgemäße Zwecke eingesetzt werden können, sind aus EP 0061024 A1, EP 0051106 A1, EP 0043952 A1, EP 0158165 A1, EP 0116846 A1 und US 3,396,129 A sowie EP 1347549 A1 bekannt. Bevorzugt besteht der Formkörper aus einem intumeszenzfähigen Polyurethanschaum, wie er aus der EP 0061024 A1, DE 3025309 A1, DE 3041731 A1, DE 3302416 A und DE 3411 327 A1 bekannt ist.

Die Erfindung betrifft ferner einen Profilstrang zur Abdichtung von Fugen im Hoch- oder Tiefbau, der als abwickelbare Spirale ausgebildet ist und der eine Biegeelastizität besitzt, um den Profilstrang aus der Spiralform in eine lineare Form zu biegen. Dadurch wird ein Profilstrang bereitgestellt, dessen Herstellung in automatisierten Produktionsanlagen möglich ist.

Vorzugsweise gehen die radial benachbarten Abschnitte des Profilstranges durch eine zerstörbare Verbindungsbrücke ineinander über, die die Spiralform sichert, sodass ein einfacher Transport des Profilstranges gewährleistet ist. Die Verbindungsbrücke kann längs der Spirallänge durchgehend sein, oder es können mehrere beabstandete Brücken vorhanden sein.

Beispielsweise ist der Profilstrang ein Brandschutzfugenprofil, insbesondere in Form eines Rundschnurprofils, eines Streifenprofils oder eines Fugenprofils, wodurch die Verwendung des Profilstranges zum Brandschutz möglich ist.

Weitere Merkmale und Vorteile der Erfindung ergeben sich aus der nachfolgenden Beschreibung und aus den beigefügten Zeichnungen, auf die Bezug genommen wird.

In den Zeichnungen zeigen:
- Figur 1: eine Draufsicht auf eine Hälfte eines erfindungsgemäßen Schäum-werkzeugs,
- Figur 2: einen Schnitt durch ein geschlossenes erfindungsgemäßes Schäumwerkzeug,
- Figur 3: einen erfindungsgemäßen Profilstrang im Schnitt,
- Figur 4: den im erfindungsgemäßen Werkzeug und mit dem erfindungsgemäßen Verfahren hergestellten Profilstrang nach Figur 3 in Draufsicht, und
- Figuren 5a und 5b: verschiedene Querschnittsformen des erfindungsgemäßen Profilstrangs.

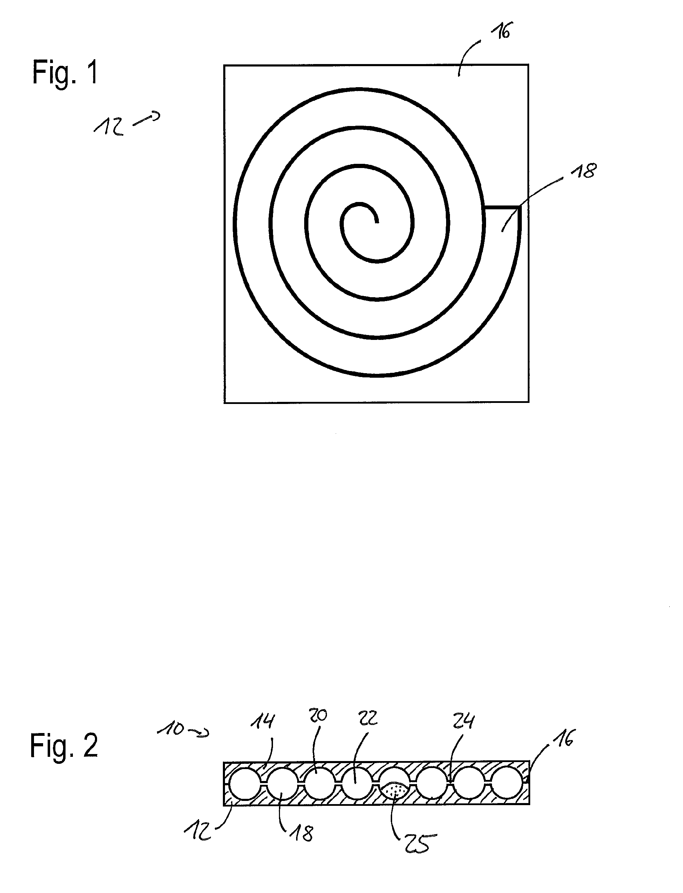

In Figur 1 ist eine Hälfte eines Schäumwerkzeugs 10 dargestellt. Das Schäumwerkzeug 10 umfasst eine Unterform 12 und eine Oberform 14 (nicht dargestellt), wobei in Figur 1 die Unterform 12 in Draufsicht dargestellt ist. Die Unterform 12 weist eine Trennebene 16 auf, die der Oberform 14 zugewandt ist. In der Oberfläche der Trennebene 16 ist eine Ausnehmung 18 vorgesehen, die eine Spirale beschreibt.

Die Oberform 14 des Schäumwerkzeugs 10 weist ebenso wie die Unterform 12 eine Ausnehmung 20 auf. Die Ausnehmung 20 ist an der der Unterform 12 zugewandten Seite der Oberform 14, das heißt in der Trennebene angeordnet und ist ebenfalls spiralförmig. Die Spiralen der Unterform 12 und der Oberform 14 sind jedoch spiegelverkehrt zueinander, das heißt, dass sie durch eine Achsenspiegelung über eine Achse in der Trennebene der Formseiten ineinander überführt werden können.

In Figur 2 ist das Schäumwerkzeug 10 in geschlossenem Zustand dargestellt. Im geschlossenen Zustand liegt die Formseite der Oberform 14 auf der Formseite der Unterform 12 auf, sodass die Ausnehmung 18 der Unterform 12 und die Ausnehmung 20 der Oberform 14 deckungsgleich sind und einen Hohlraum 22 bilden. Aufgrund der Spiralform der Ausnehmungen 18, 20 bildet der Hohlraum 22 ebenfalls eine Spirale. Das Querschnittsprofil des spiralförmigen Hohlraums 22 ist beispielsweise kreisförmig, siehe Figur 2.

In den Bereichen, die sich zwischen radial benachbarten Abschnitten des Hohlraums 22 befinden, stehen die Unterform 12 und die Oberform 14 nicht in Kontakt, sodass sich dort ein dünner Steg 24 ausbildet. Dieser Steg 24 verbindet somit radial benachbarte Abschnitte des Hohlraums 22.

Die Länge des spiralförmigen Hohlraums 22, das heißt die Länge, die der Hohlraum 22 in abgewickelter Form haben würde, beträgt wenigstens 1,5 m.

Zur Herstellung eines schnur- oder bandartigen Profilstranges wird zunächst in die Ausnehmung 18 der Unterform 12 ein fließfähiges Schäummaterial 25, das aus wenigstens zwei Komponenten besteht, eingebracht. Das fließfähige Schäummaterial 25 ist beispielsweise eine Reaktionsmasse und kann Polyurethanschaum oder Silikonschaum, wie bereits vorne genauer erläutert, sein.

Nach dem Einfüllen des fließfähigen Materials in die Unterform 12 des Schäumwerkzeugs 10 wird die Oberform 14 auf die Unterform 12 gesetzt und somit das Schäumwerkzeug 10 geschlossen.

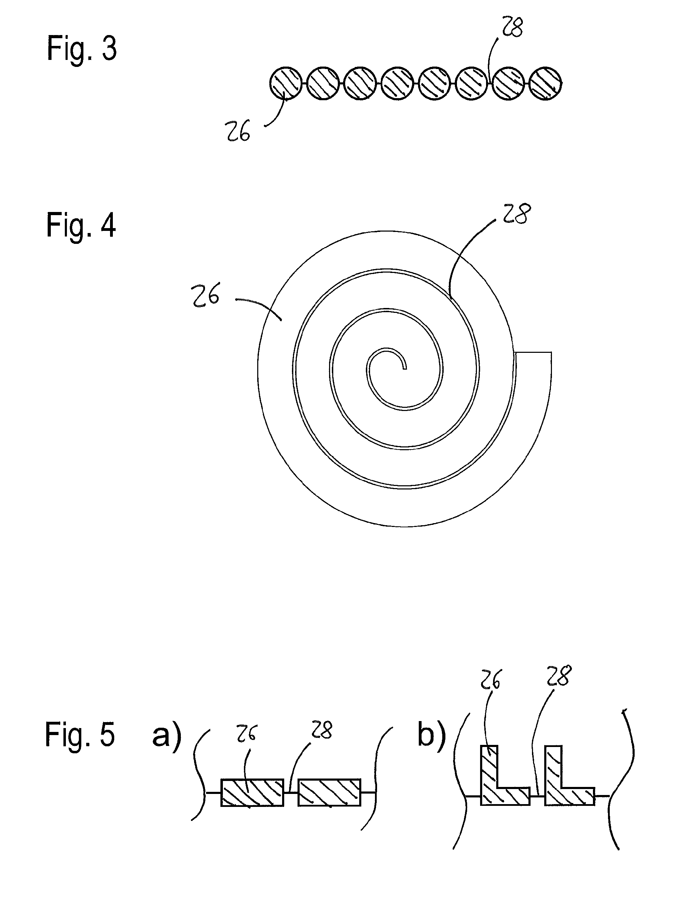

Das fließfähige Schäummaterial 25 reagiert nun unter Vergrößerung seines Volumens aus. Durch die Volumenzunahme füllt das ausreagierte und ausgehärtete Schäummaterial 25 den gesamten Hohlraum 22 und den Steg 24 aus und erzeugt somit einen Profilstrang 26, wie er in Figur 3 und 4 dargestellt ist.

Der Profilstrang 26, also das ausgehärtete Schäummaterial, ist beispielsweise ein verformbarer Polymerschaum, der gegebenenfalls intumeszierend ausgebildet ist.

Anschließend wird das Schäumwerkzeug 10 geöffnet und der Profilstrang 26 entnommen.

Der in Figur 3 und 4 dargestellte Profilstrang 26 ist aufgrund der Spiralform des Hohlraums 22 als abwickelbare Spirale ausgebildet.

Radial benachbarte Abschnitte des Profilstrangs 26 gehen durch eine zerstörbare Verbindungsbrücke 28 ineinander über. Die Verbindungsbrücke 28 ist durch Ausschäumen des Stegs 24 entstanden und ist derart dünn ausgeführt, dass sie einfach ohne Werkzeug reißt, wenn die Spirale abgewickelt wird.

Um den Profilstrang 26 verbauen zu können, ist es notwendig, den Profilstrang 26 abzuwickeln. Dazu besitzt der Profilstrang 26 eine Biegeelastizität, die es einem Anwender erlaubt, den Profilstrang 26 aus seiner Spiralform in eine lineare Form zu biegen. Dabei wird die Verbindungsbrücke 28 zumindest teilweise zerstört, sodass sich radial benachbarte Bereiche des Profilstrangs 26 voneinander lösen können.

Beispielsweise ist der Profilstrang 26 ein Brandschutzfugenprofil, das, wie in diesem Ausführungsbeispiel gezeigt, ein Rundschnurprofil ist.

Andere Profile des Profilstrangs 26 sind ebenso denkbar. Als Beispiel hierzu sei ein Streifenprofil (Figur 5a) und ein L-förmiges Fugenprofil (Figur 5b) erwähnt. Selbstverständlich sind beliebig andere Formen ebenfalls denkbar.

Weiterhin sei bemerkt, dass die Beschreibung des Schäumwerkzeugs 10, des Verfahrens und des Profilstrangs 26 keinesfalls einschränkend zu verstehen ist. So ist zum Beispiel das Vorsehen von Entlüftungsmitteln im Schäumwerkzeug 10 von Vorteil, um den Hohlraum 22 während des Ausschäumens des Schäummaterials 25 im Hohlraum 22 entlüften zu können.

## Patentansprüche

1. Schäumwerkzeug zum Schäumen eines schnur- oder bandartigen Profilstrangs (26) für den Hoch- oder Tiefbau, insbesondere eines Brandschutzfugenprofils, mit einem in dem Schäumwerkzeug ausgebildeten auszuschäumenden Hohlraum (22), wobei der Hohlraum (22) im Wesentlichen eine Spirale darstellt.

2. Schäumwerkzeug nach Anspruch 1, **dadurch gekennzeichnet, dass** radial benachbarte Abschnitte des Hohlraums (22) durch einen dünnen Steg (24) miteinander verbunden sind.

3. Verfahren zur Herstellung eines schnur- oder bandartigen Profilstranges für den Hoch- oder Tiefbau, insbesondere einer Rundschnur, eines Fugenprofils oder Streifenmaterials, wobei ein fließfähiges Schäummaterial (25) in ein Schäumwerkzeug (10) gemäß einem der vorhergehenden Ansprüche eingebracht wird, im Schäumwerkzeug (10) ausreagiert und anschließend aus dem Schäumwerkzeug (10) entnommen wird.

4. Verfahren nach Anspruch 3, **dadurch gekennzeichnet, dass** das fließfähige Schäummaterial (25) eine Reaktionsmasse ist, die wenigstens zwei Komponenten enthält.

5. Verfahren nach Anspruch 3 oder 4, **dadurch gekennzeichnet, dass** das fließfähige Schäummaterial (25) Polyurethanschaum oder Silikonschaum ist.

6. Verfahren nach einem der Ansprüche 3 bis 5, **dadurch gekennzeichnet, dass** das fließfähige Schäummaterial (25) im ausgehärteten Zustand ein elastisch verformbarer Polymerschaum ist.

7. Verfahren nach einem der Ansprüche 3 bis 6, **dadurch gekennzeichnet, dass** das fließfähige Schäummaterial (25) im ausgehärteten Zustand intumeszierend ist.

8. Profilstrang zur Abdichtung von Fugen im Hoch- oder Tiefbau, **dadurch gekennzeichnet, dass** der Profilstrang (26) als abwickelbare Spirale ausgebildet ist und der Profilstrang (26) eine Biegeelastizität besitzt, um den Profilstrang (26) aus der Spiralform in eine lineare Form zu biegen.

9. Profilstrang nach Anspruch 8, **dadurch gekennzeichnet, dass** radial benachbarte Abschnitte des Profilstrangs (26) durch eine zerstörbare Verbindungsbrücke (28) ineinander übergehen, die die Spiralform sichert.

10. Profilstrang nach Anspruch 8 oder 9, **dadurch gekennzeichnet, dass** der Profilstrang (26) ein Brandschutzfugenprofil ist, insbesondere in Form eines Rundschnurprofils, eines Streifenprofils oder eines Fugenprofils.
